# EUROPEAN PATENT APPLICATION

(11) **EP 1 826 676 A1**
(43) Date of publication of application: **29.08.2007**
(21) Application number: 06252688.4
(22) Date of filing: 23.05.2006
(51) Int. Cl.: G06F 12/10

(54) **Address converting apparatus**

(30) Priority: 28.02.2006 JP 2006053381
(71) Applicant: FUJITSU LIMITED, Kawasaki-shi, Kanagawa 211-8588 (JP)
(72) Inventor: Nishino, Shuji, Fujitsu Limited, Kawasaki-shi Kanagawa 211-8588 (JP); Nagatsuka, Masaaki, Fujitsu Limited, Kawasaki-shi Kanagawa 211-8588 (JP); Hosoe, Koji, Fujitsu Limited, Kawasaki-shi Kanagawa 211-8588 (JP)
(74) Representative: Stebbing, Timothy Charles

(57) **Abstract**

A first address conversion table (13a) stores first address data corresponding to a receiving buffer in a main memory (22) from among address data stored in a page table (22a). A second address conversion table (13b) stores second address data corresponding to an area other than the receiving buffer area in the main memory (22) from among the address data stored in the page table (22a). An address-conversion-request determining unit (12a) determines whether an address conversion request is for the receiving buffer area. An address converting unit (12b) converts the address based on a result of determination by the address-conversion-request determining unit (12a).

## Description

The present invention relates to a technology for converting an address in response to an address conversion request by using a page table that stores address data that is used for converting the address between a virtual address and a physical address.

Recently, in a data processor that uses a virtual storage method, address data pertaining to a correspondence between a virtual address and a physical address is stored in a main memory, and a part of the address data that is stored in the main memory is stored in a translation look-aside buffer (TLB) (see, for example, Japanese Patent No. 2586160). In such a data processor, if the address data corresponding to the virtual address that receives a conversion request is stored in the TLB, the TLB converts the virtual address into the physical address. If the address data corresponding to the virtual address that receives a conversion request is not stored in the TLB, the TLB accesses the main memory and converts the virtual address into the physical address.

TLB control methods such as full set associative method, direct mapping method, N-way set associative method etc. are used in an address converting apparatus. If a page table that maintains the address data stored in the main memory includes a multilevel structure, a similar multilevel structure is also included in the TLB.

When distributing data during communication, the data processor secures in the main memory a receiving buffer area that is used for distribution of data. When distributing data, the data processor reads data that is stored in the receiving buffer area and uses a conversion table in the main memory to carry out address conversion pertaining to the read data.

However, although the data processor reads the data from the receiving buffer area when distributing data during communication, in the conventional technology, a conversion table for a receiving buffer is not always stored in the TLB because all data is treated uniformly. If the conversion table for the receiving buffer is not stored in the TLB, a cache miss occurs, and the data processor must access the main memory having a low reading speed during distribution of data, thereby reducing the process speed.

An address converting apparatus according to one aspect of the present invention converts an address in response to an address conversion request by using a page table that stores address data used for converting the address between a virtual address and a physical address. The address converting apparatus includes a first address conversion table that extracts first address data corresponding to a receiving buffer area that is used for exchanging communication data in a main memory from among address data stored in the page table, and stores the first address data; a second address conversion table that extracts second address data corresponding to an area other than the receiving buffer area in the main memory from among the address data stored in the page table, and stores the second address data; an address-conversion-request determining unit that determines whether the address conversion request is for the receiving buffer area; and an address converting unit that converts the address based on a result of determination by the address-conversion-request determining unit. When the address-conversion-request determining unit determines that the address conversion request is for the receiving buffer area, the address converting unit converts the address using at least one of the first address data and the address data stored in the page table. When the address-conversion-request determining unit determines that the address conversion request is not for the receiving buffer area, the address converting unit converts the address using at least one of the second address data and the address data stored in the page table.

Another aspect of the invention provides an address conversion method as defined in the claims.

The above and other features, advantages and technical and industrial significance of this invention will be better understood by reading the following detailed description of presently preferred embodiments of the present invention, when considered in connection with the accompanying drawings, in which:
Fig. 1 is a schematic of an address converting apparatus according to a first embodiment of the present invention;
Fig. 2 is a block diagram of the address converting apparatus according to the first embodiment;
Fig. 3 is a schematic for illustrating a data structure of a TLB;
Fig. 4 is a schematic for illustrating a data structure of a page table;
Fig. 5 is a flowchart of a processing procedure for an address conversion process according to the first embodiment;
Fig. 6 is a flowchart of a processing procedure for a detailed address conversion process according to the first embodiment; and
Fig. 7 is a flowchart of a processing procedure for a process operation of an address converting apparatus according to a second embodiment of the present invention.

Exemplary embodiments of the present invention are explained in detail below with reference to the accompanying drawings.

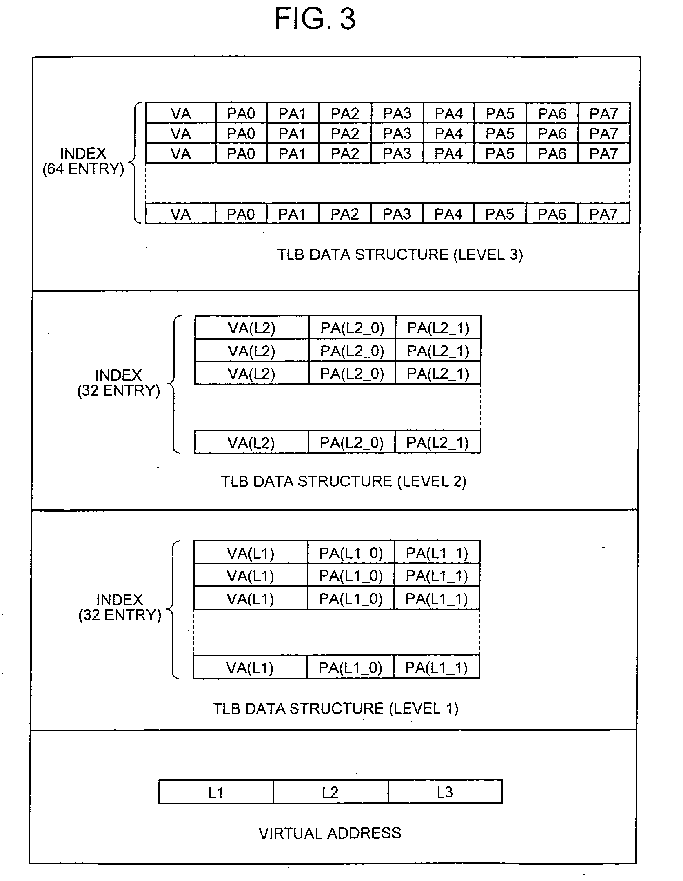

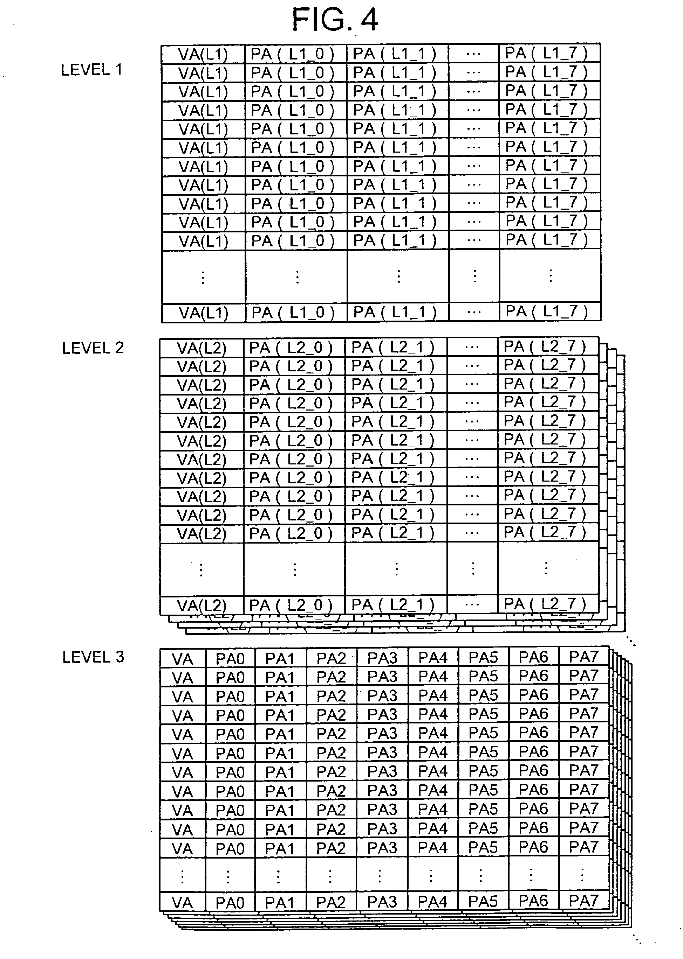

A "page table" is a table that stores address data that is used for address conversion between a virtual address and a physical address. As shown in Fig. 4, the page table has a multilevel structure and is divided into three hierarchies, levels 1 to 3. In addition, as shown in Fig. 3, the virtual address includes data corresponding to the levels 1 to 3 of the page table.

In the page table, a hierarchy pertaining to the level 1 stores address data which establishes a correspondence between L1 physical address (for example, PA(L1_0) of Fig. 4) that specifies a position of address data that is stored in a hierarchy pertaining to the level 2 and L1 virtual address (for example, VA(L1) of Fig. 4) that represents L1 part of the virtual address. Further, a hierarchy pertaining to the level 2 stores address data which establishes a correspondence between L2 physical address (for example, PA(L2) of Fig. 4) that specifies a position of address data that is stored in a hierarchy pertaining to the level 3 and L2 virtual address (for example, VA(L2) of Fig. 4) that represents L2 part of the virtual address. A hierarchy pertaining to the level 3 stores address data, which establishes a correspondence between the physical address (for example, PA of Fig. 4) and L3 virtual address (for example, VA of Fig. 4) that represents L3 part of the virtual address.

The data processor reads from the hierarchy pertaining to the level 1 of the page table, L1 physical address (for example, PA(L1_0) of Fig. 4) corresponding to L1 virtual address (for example, VA(L1) of Fig. 4) that represents L1 part of the virtual address. Next, the data processor reads from the hierarchy pertaining to the level 2 of the page table, L2 physical address (for example, PA(L2_0) of Fig. 4) that corresponds to the read L1 physical address and L2 virtual address (for example, VA(L2_0) of Fig. 4) that represents L2 part of the virtual address. Next, the data processor reads the physical address (for example, PA of Fig. 4) that corresponds to the read L2 physical address and L3 virtual address (for example, VA of Fig. 4) that represents L3 part of the virtual address.

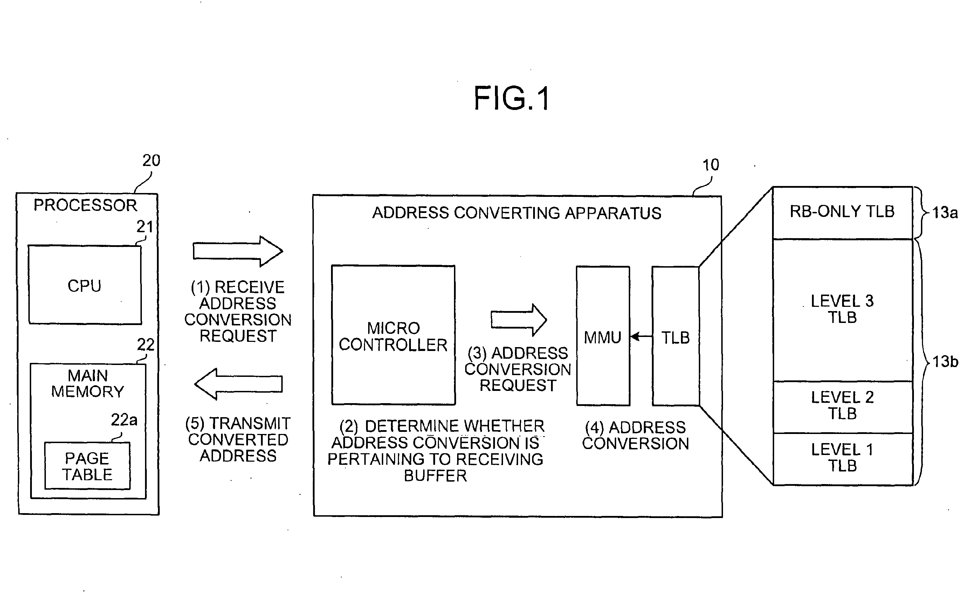

Fig. 1 is a schematic of an address converting apparatus 10 according to a first embodiment of the present invention.

The address converting apparatus 10 carries out address conversion in response to an address conversion request by using the page table that stores the address data (conversion table) that is used for address conversion between the virtual address and the physical address. The salient feature of the address converting apparatus according to the first embodiment is that the address converting apparatus reduces cache misses, thereby enhancing the processing speed.

As shown in Fig. 1, the address converting apparatus 10 is connected to a processor 20 that includes a central processing unit (CPU) 21 that carries out various processes and a main memory 22. The main memory 22 maintains a page table 22a that stores the address data that is used for address conversion between the virtual address and the physical address. As shown in Fig. 4, the page table 22a includes a multilevel structure and is divided into three hierarchies, levels 1 to 3.

The address converting apparatus 10 includes a receiving buffer (RB)-only TLB 13a and a level 1 to 3 TLB 13b. From the address data that is stored in the page table 22a, the RB-only TLB 13a extracts from the page table 22a the address data corresponding to a receiving buffer area that is used during distribution of communication data in the main memory 22, and stores the extracted data. As shown in Fig. 3, the level 1 to 3 TLB 13b is a page table having a multilevel structure that is similar to the structure of the page table 22a. From the address data that is stored in the page table 22a, the level 1 to 3 TLB 13b extracts address data corresponding to an area (or areas) other than the receiving buffer area in the main memory 22 and stores the extracted data.

If the address converting apparatus 10 receives an address conversion request from the CPU 21 of the processor 20 (see (1) of Fig. 1), a micro controller of the address converting apparatus 10 determines whether the address conversion request is pertaining to the receiving buffer area (see (2) of Fig. 1), and issues an address conversion request to a memory management unit (MMU) (see (3) of Fig. 1). If the address conversion request is pertaining to the receiving buffer area, the address converting apparatus 10 carries out address conversion by using the address data stored in the RB-only TLB 13a. If the address conversion request is not pertaining to the receiving buffer area, the address converting apparatus 10 carries out address conversion by using the address data that is stored in any one of the level 1 to 3 TLB 13b or the page table 22a or both (see (4) of Fig. 1). Next, the address converting apparatus 10 transmits the converted address to the processor 20 (see (5) of Fig. 1) .

Thus, the address converting apparatus 10 having the aforementioned salient feature separately controls the receiving buffer area that is frequently used, and areas other than the receiving buffer area. If the address conversion request is pertaining to the receiving buffer area, the address converting apparatus 10 accesses the RB-only TLB 13a and uses the address data stored in the receiving buffer to carry out address conversion, thereby enabling to reduce cash misses and enhance the processing speed.

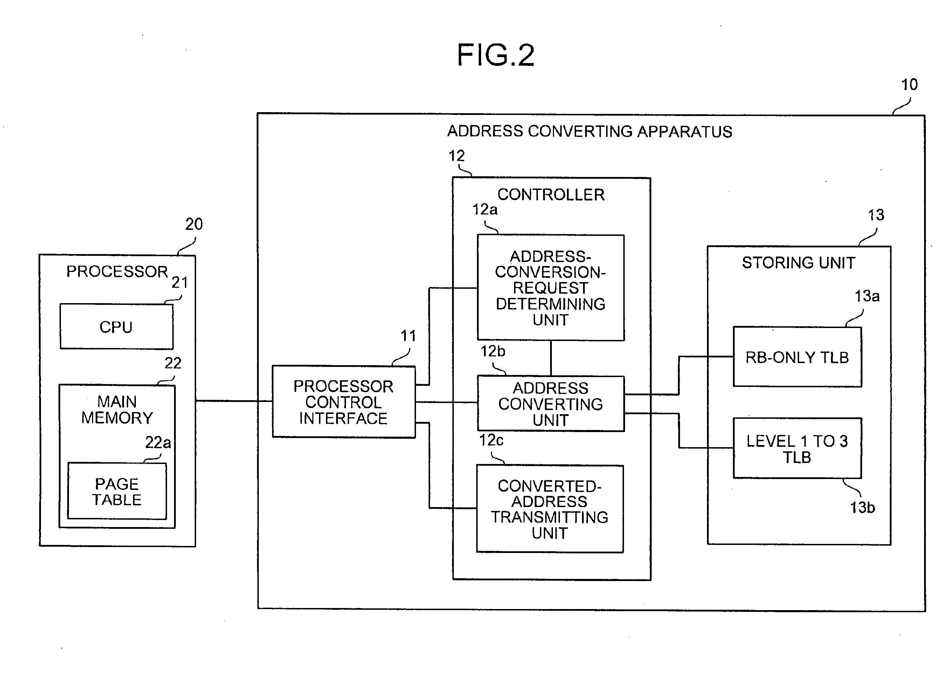

Fig. 2 is a block diagram of the address converting apparatus 10 according to the first embodiment.

The processor 20 includes the CPU 21 and the main memory 22. The main memory 22 maintains the page table 22a, which stores the address data that is used for address conversion between the virtual address and the physical address. As shown in Fig. 4, the page table 22a has a multilevel structure and is divided into three hierarchies, levels 1 to 3.

The page table 22a stores in the hierarchy pertaining to the level 3 that is the last level, the address data (for example, "PAO" of Fig. 4) that establishes a correspondence between the virtual address and the physical address. The page table 22a stores in the hierarchy pertaining to the level 2 the address data (for example, "PA(L2_0)") for specifying the position of the address data that is stored in the hierarchy pertaining to the level 3. Further, the page table 22a stores in the hierarchy pertaining to the level 1 the address data (for example, "PA(L1_0)") for specifying the position of the address data that is stored in the hierarchy pertaining to the level 2.

As shown in Fig. 2, the address converting apparatus 10 includes a processor control interface 11, a controller 12, and a storing unit 13.

The processor control interface 11 controls communication related to various types of data that is exchanged between the address converting apparatus 10 and the processor 20. The processor control interface 11 controls receipt of data related to the address conversion request between the address converting apparatus 10 and the processor 20, and transmission of data related to the converted address.

The storing unit 13 stores data and programs necessary for various processes that are carried out by the controller 12. The storing unit 13 includes the RB-only TLB 13a and the level 1 to 3 TLB 13b that are especially closely related to the present invention. The RB-only TLB 13a corresponds to "First address conversion table" described in the claims, and the level 1 to 3 TLB 13b corresponds to "Second address conversion table" described in the claims.

The RB-only TLB 13a stores the address data pertaining to the RB. From the address data that is stored in the page table 22a, the RB-only TLB 13a extracts from the page table 22a the address data corresponding to the receiving buffer area that is used during distribution of communication data in the main memory 22, and stores the extracted data. The size of the area that stores the address data pertaining to the RB is limited, and the TLB that is necessary for the address conversion pertaining to the receiving buffer needs to store only a few entries in comparison with the TLB that is used for normal address conversion. According to the first embodiment, the direct mapping method is used as a control method pertaining to the RB-only TLB 13a. However, other methods such as the full set associative method or, the N-way set associative method can also be used.

From the address data that is stored in the page table 22a, the level 1 to 3 TLB 13b extracts from the page table 22a the address data corresponding to the area other than the receiving buffer area in the main memory 22, and stores the extracted data. As shown in Fig. 3, the level 1 to 3 TLB 13b has a multilevel structure and stores the address data in the form of entries such that the number of entries increases in successive levels until the last level.

The level 1 to 3 TLB 13b stores in the level 3 TLB, which represents the last level, the address data (for example, "PAO" of Fig. 3) that establishes a correspondence between the virtual address and the physical address. The level 1 to 3 TLB 13b stores in the level 2 TLB the address data (for example, "PA(L2_0)" of Fig. 4) that specifies the position of the address data that is stored in the hierarchy pertaining to the level 3 of the page table 22a. Further, the level 1 to 3 TLB 13b stores in the level 1 TLB the address data (for example, "PA(L1_0)" of Fig. 4) that specifies the position of the address data that is stored in the hierarchy pertaining to the level 2 of the page table 22a.

The controller 12 includes an internal memory for storing programs and necessary data that regulate sequences of various types of processes. The controller 12 uses the stored programs and data to execute various processes. Especially, the controller 12 includes an address-conversion-request determining unit 12a, an address converting unit 12b, and a converted-address transmitting unit 12c that are closely related to the present invention. The address-conversion-request determining unit 12a corresponds to "Address-conversion-request determining unit" described in the claims, and the address converting unit 12b corresponds to "Address converting unit" described in the claims.

The address-conversion-request determining unit 12a determines whether the address conversion request is pertaining to the receiving buffer area. To be specific, upon receiving the address conversion request from the CPU 21 of the processor 20, the address-conversion-request determining unit 12a determines whether the address conversion request is pertaining to the receiving buffer area.

If the address conversion request is pertaining to the receiving buffer area, the address converting unit 12b uses the address data stored in the RB-only TLB 13a to carry out address conversion. If the address conversion request is not pertaining to the receiving buffer area, the address converting unit 12b uses the address data stored in any one of the level 1 to 3 TLB 13b or the page table 22a or both to carry out address conversion.

If the address-conversion-request determining unit 12a determines that the address conversion request is pertaining to the receiving buffer area, the address converting unit 12b reads from the RB-only TLB 13a the address data corresponding to the address that is included in the address conversion request, and uses the read address data to carry out address conversion.

If the address-conversion-request determining unit 12a determines that the address conversion request is not pertaining to the receiving buffer area, the address converting unit 12b reads from the level 1 to 3 TLB 13b the address data corresponding to the address that is included in the address conversion request, and uses the read address data to carry out address conversion.

The address converting unit 12b searches for the address data corresponding to the virtual address included in the address conversion request in the level 3 TLB that represents the last hierarchy of the TLB. If the address data corresponding to the virtual address exists in the level 3 TLB, the address converting unit 12b reads the corresponding address data from the level 3 TLB and uses the read address data to convert the virtual address into the physical address.

If the address data corresponding to the virtual address included in the address conversion request does not exist in the level 3 TLB, the address converting unit 12b searches the level 2 TLB to determine whether the address data corresponding to the virtual address exists in the level 2 TLB. If the address data corresponding to the virtual address included in the address conversion request exists in the level 2 TLB, the address converting unit 12b reads from the level 2 TLB the address data (for example, "PA(L2_0)" of Fig. 3) for specifying the position of the address data that is stored in the hierarchy pertaining to the level 3 of the page table 22a.

The address converting unit 12b reads the address data corresponding to the read address data along with eight address data that are serially stored from the hierarchy pertaining to the level 3 of the page table 22a, and stores the read address data in the level 3 TLB. Then, the address converting unit 12b reads the stored address data from the level 3 TLB and uses the read address data to convert the virtual address into the physical address.

If the address data corresponding to the virtual address included in the address conversion request does not exist in the level 2 TLB, the address converting unit 12b finds out whether the address data corresponding to the virtual address exists in the level 1 TLB. If the address data corresponding to the virtual address included in the address conversion request exists in the level 1 TLB, the address converting unit 12b reads the address data (for example, "PA(L1_1)" from Fig. 3) from the level 1 TLB, reads from the hierarchy pertaining to the level 2 of the page table 22a the address data corresponding to the read address data along with two address data that are serially stored, and stores the read address data in the level 2 TLB.

The address converting unit 12b reads the stored address data from the level 2 TLB, reads from the hierarchy pertaining to the level 3 of the page table 22a the address data corresponding to the read address data, stores in the level 3 TLB the read address data along with eight (items of) address data (addresses) that are serially stored, reads the stored address data from the level 3 TLB, and uses the read address data to convert the virtual address into the physical address.

If the address data corresponding to the virtual address included in the address conversion request does not exist in the level 1 TLB, the address converting unit 12b reads the address data corresponding to the virtual address included in the address conversion request from the hierarchy pertaining to the level 1 of the page table 22a, stores in the level 1 TLB the read address data along with two address data that are serially stored, reads the stored address data, reads from the hierarchy pertaining to the level 2 of the page table 22a the address data corresponding to the read address data, and stores in the level 2 TLB the read address data along with two address data that are serially stored.

The address converting unit 12b reads the stored address data from the level 2 TLB, reads from the level 3 of the page table 22a the address data corresponding to the read address data along with eight address data that are serially stored, stores the read address data in the level 3 TLB, reads the stored address data from the level 3 TLB, and uses the read address data to convert the virtual address into the physical address.

The converted-address transmitting unit 12c transmits the converted address to the processor 20. The converted-address transmitting unit 12c transmits the data that is converted by the address converting unit 12b to the CPU 21 of the processor 20.

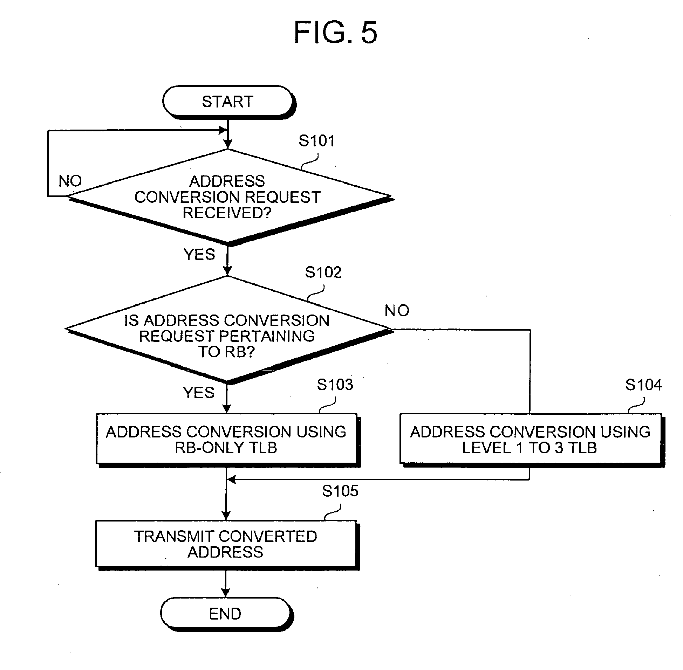

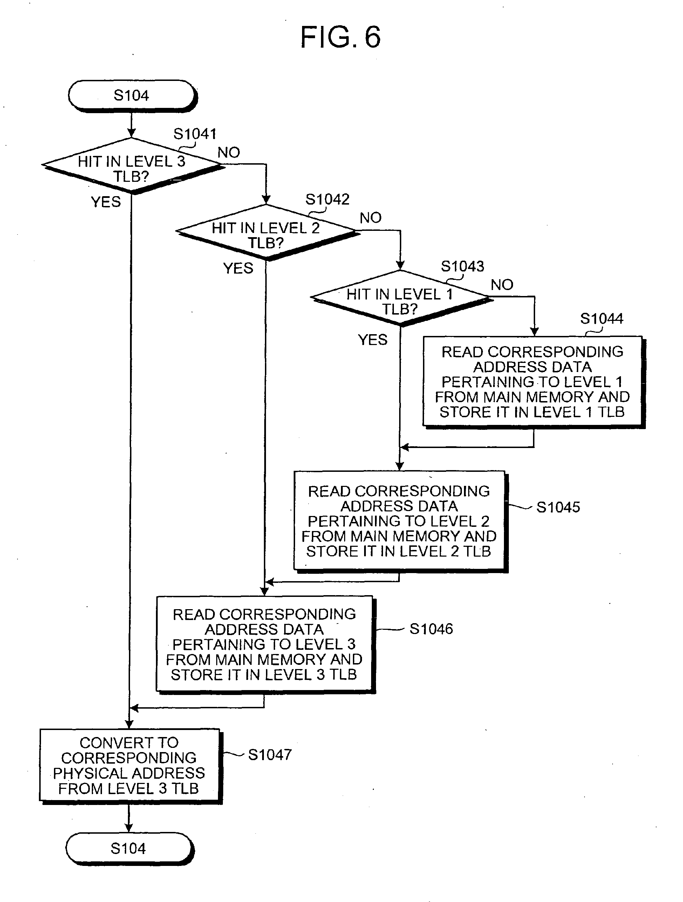

Fig. 5 is a flowchart of a processing procedure for an address conversion process according to the first embodiment. Fig. 6 is a flowchart of a processing procedure for a detailed address conversion process according to the first embodiment.

As shown in Fig. 5, the address-conversion-request determining unit 12a of the address converting apparatus 10, upon receiving an address conversion request from the CPU 21 of the processor 20 ("Yes" at step S101), determines whether the address conversion request is pertaining to the receiving buffer area (step S102).

If the address-conversion-request determining unit 12a determines that the address conversion request is pertaining to the receiving buffer area ("Yes" at step S102), the address converting unit 12b reads from the RB-only TLB 13a the address data corresponding to the address that is included in the address conversion request, and uses the read address data to carry out address conversion (step S103).

If the address-conversion-request determining unit 12a determines that the address conversion request is not pertaining to the receiving buffer area ("No" at step S102), the address converting unit 12b reads from the level 1 to 3 TLB 13b the address data corresponding to the address that is included in the address conversion request, and uses the read address data to carry out address conversion (step S104).

The address conversion is explained in detail with reference to Fig. 6. The address converting unit 12b finds out whether the address data corresponding to the virtual address included in the address conversion request exists in the level 3 TLB that represents the last hierarchy of the TLB (step S1041). If the address data corresponding to the virtual address exists in the level 3 TLB ("Yes" at step S1041), the address converting unit 12b reads the corresponding address data from the level 3 TLB and uses the read address data to convert the virtual address to the physical address (step S1047).

If the address data corresponding to the virtual address included in the address conversion request does not exist in the level 3 TLB ("No" at step S1041), the address converting unit 12b searches for the address data corresponding to the virtual address in the level 2 TLB (step S1042). If the address data corresponding to the virtual address included in the address conversion request exists in the level 2 TLB ("Yes" at step S1042), the address converting unit 12b reads from the level 2 TLB the address data (for example, "PA(L2_0)" of Fig. 3) for specifying the position of the address data that is stored in the hierarchy pertaining to the level 3 of the page table 22a.

The address converting unit 12b reads from the hierarchy pertaining to the level 3 of the page table 22a, the address data corresponding to the read address data along with eight address data that are serially stored, and stores the read address data in the level 3 TLB (step S1046). The address converting unit 12b reads the stored address data from the level 3 TLB, and uses the read address data to convert the virtual address to the physical address (step S1047).

If the address data corresponding to the virtual address included in the address conversion request does not exist in the level 2 TLB ("No" at step S1042), the address converting unit 12b determines whether the address data corresponding to the virtual address exists in the level 1 TLB (step S1043). If the address data corresponding to the virtual address included in the address conversion request exists in the level 1 TLB ("Yes" at step S1043), the address converting unit 12b reads from the level 1 TLB the address data (for example, "PA(L1_1)" of Fig. 3), reads from the hierarchy pertaining to the level 2 of the page table 22a the address data corresponding to the read address data along with two address data that are serially stored, and stores the read address data in the level 2 TLB (step S1045).

The address converting unit 12b reads the stored address data from the level 2 TLB, reads from the hierarchy pertaining to the level 3 of the page table 22a the address data corresponding to the read address data, stores in the level 3 TLB the read address data along with 8 address data that are serially stored (step S1046), reads the stored address data from the level 3 TLB, and uses the read address data to convert the virtual address to the physical address (step S1047).

If the address data corresponding to the virtual address included in the address conversion request does not exist in the level 1 TLB ("No" at step S1043), the address converting unit 12b reads from the hierarchy pertaining to the level 1 of the page table 22a the address data corresponding to the virtual address included in the address conversion request along with two address data that are serially stored, stores the read address data in the level 1 TLB (step S1044), reads the stored address data, reads from the hierarchy pertaining to the level 2 of the page table 22a the address data corresponding to the read address data along with two address data that are serially stored, and stores the read address data in the level 2 TLB (step S1045).

The address converting unit 12b reads the stored address data from the level 2 TLB, reads from the level 3 of the page table 22a the address data corresponding to the read address data along with eight address data that are serially stored, stores the read address data in the level 3 TLB (step S1046), reads the stored address data from the level 3 TLB, and uses the read address data to convert the virtual address into the physical address (S1047).

The converted-address transmitting unit 12c transmits the converted address to the processor 20. The converted-address transmitting unit 12c transmits to the CPU 21 of the processor 20 the data that is converted by the address converting unit 12b.

The address converting apparatus 10 according to the first embodiment includes the RB-only TLB 13a that extracts, from the address data that is stored in the page table 22a, the address data corresponding to the receiving buffer area that is used during distribution of communication data in the main memory 22, and stores the extracted data.

Furthermore, the address converting apparatus 10 includes the level 1 to 3 TLB that extracts, from the address data that is stored in the page table 22a, the address data corresponding to area other than the receiving buffer area in the main memory 22, and stores the extracted data. The address-conversion-request determining unit 12a determines whether the conversion request is pertaining to the receiving buffer area.

If the address conversion request is pertaining to the receiving buffer area, the address converting unit 12b uses the address data that is stored in any one of the RB-only TLB 13a or the page table 22a or both to carry out address conversion.

If the address conversion request is not pertaining to the receiving buffer area, the address converting unit 12b uses the address data that is stored in any one of the level 1 to 3 TLB 13b or the page table 22a or both to carry out address conversion. Thus, the address converting apparatus 10 separately controls the receiving buffer area that is frequently used and area other than the receiving buffer area.

If the address conversion request is pertaining to the receiving buffer area, the address converting apparatus 10 accesses the RB-only TLB 13a and uses the address data stored in the receiving buffer to carry out address conversion, thereby enabling to reduce cache misses and enhance the process speed.

According to the first embodiment, the page table 22a has a multilevel structure. The level 1 to 3 TLB 13b similarly has a multilevel structure and stores the address data such that the number of address data increases in successive levels until the last level. Thus, the last level, which is frequently used, has the maximum number of items of address data, thereby enabling a reduction in the number of cache misses and enhancing the processing speed.

Furthermore, according to the first embodiment, when carrying out address conversion by using the address data stored in the page table 22a instead of using the address data stored in the level 1 to 3 TLB 13b, the address converting unit 12b reads from the page table 22a the address data that are sequentially stored in the page table 22a along with the address data that is used for address conversion, and stores the read data in the level 1 to 3 TLB 13b, thereby removing the necessity, during address conversion of sequential data for example, to read the address data from the main memory and enabling to enhance the processing speed.

According to the present invention, when transferring data that is distributed to a regular address (hereinafter, "Stride transfer") subsequent necessary converted data can be estimated, and the estimated converted data can be cached beforehand in the TLB.

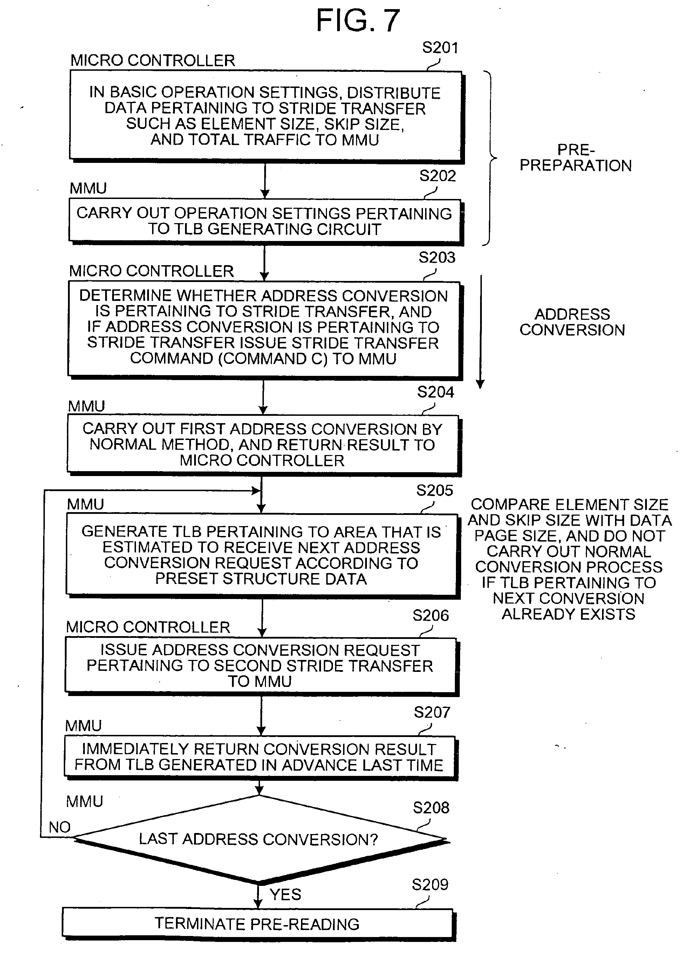

Fig. 7 is a flowchart of a processing procedure for a process operation of the address converting apparatus 10 according to a second embodiment of the present invention. As shown in Fig. 7, in basic operation settings, the micro controller of the address converting apparatus 10 distributes data pertaining to element size, skip size, total traffic to the MMU (step S201). The MMU carries out operation settings pertaining to a TLB generating circuit from the received data (step S202). Upon receiving an address conversion request, the micro controller determines whether the address conversion is pertaining to stride transfer. If the address conversion is pertaining to stride transfer, the micro controller issues a stride transfer command to the MMU (step S203). The MMU, upon receiving the stride transfer command, carries out the first address conversion using the normal method and returns a micro result (step S204). Upon receiving the next address conversion request, the micro controller generates TLB pertaining to the estimated area according to preset structure data (step S205).

The micro controller issues the address conversion request pertaining to a second stride transfer to the MMU (step S206). The MMU transmits a conversion result from the pre-generated TLB to the micro controller (step S207). The MMU determines from the total traffic whether the address conversion is the last address conversion (step S208). If the address conversion is not the last address conversion ("No" at step S208), the MMU repeats a similar process (steps S205 through S208). If the address conversion is the last address conversion ("Yes" at step S208), the MMU terminates pre-reading and ends the process.

During a stride transfer of data, based on data related to the stride transfer, the micro controller reads from the page table 22a address data that is estimated to be necessary for address conversion of subsequently received data, and newly stores the read address data in the level 1 to 3 TLB 13b. By storing the necessary address data beforehand in the level 1 to 3 TLB 13b waiting time to read the address data from the main memory 22 can be reduced, thereby enabling an enhancement in processing speed.

The page table explained in the first embodiment stores the address data such that the number of entries increases in successive levels until the last level. However, the present invention is not to be thus limited, and a page table that stores address data such that each level has the same number of entries can also be used.

When storing address data in the TLB, the address converting apparatus explained in the first embodiment reads eight address data (addresses) that are serially stored along with the address data that is used for address conversion. However, the present invention is not to be thus limited, and an address converting apparatus which reads only the address data that is used for address conversion, or an address converting apparatus which reads any random number of serially stored address data along with the address data that is used for address conversion can also be used.

The constituent elements of the device illustrated are merely conceptual and may not necessarily physically resemble the structures shown in the drawings. For instance, the device need not necessarily have the structure that is illustrated. The device as a whole or in parts can be broken down or integrated either functionally or physically in accordance with the load or how the device is to be used. For example, the address-conversion-request determining unit 12a and the address converting unit 12b can be integrated. Further, the process functions performed by the apparatus are entirely or partially realized by the CPU or a program executed by the CPU or by a hardware using wired logic.

All the automatic processes explained in the present embodiments can be, entirely or in part, carried out manually. Similarly all the manual processes explained in the present embodiment can be entirely or in part carried out automatically by a known method. The sequence of processes, the sequence of controls, specific names, and data including various parameters can be changed as required unless otherwise specified.

The communication control method explained in the present embodiments can be realized by executing a preformed program using a computer such as a personal computer or a workstation. The program can be distributed via a network such as Internet etc. The program can also be recorded in a computer readable recording medium such as a hard disk, a flexible disk (FD), a compact disk-read only memory (CD-ROM), a magneto-optical (MO) disk, digital versatile disk (DVD) etc., read by the computer from the recording medium, and executed.

According to an embodiment of the present invention, an address converting apparatus includes a first address conversion table which extracts, from address data that is stored in a page table, address data corresponding to a receiving buffer area that is used for distribution of communication data in a main memory and stores the extracted data. Further, the address converting apparatus includes a second address conversion table, which extracts, from the address data that is stored in the page table, address data corresponding to area other than the receiving buffer area in the main memory and stores the extracted data. An address-conversion-request determining unit determines whether an address conversion request is pertaining to the receiving buffer area. If the address conversion request is pertaining to the receiving buffer area, the address converting apparatus carries out address conversion by using the address data that is stored in any one of the first address conversion table or the page table or both, and if the address conversion request is not pertaining to the receiving buffer area, the address converting apparatus carries out address conversion by using the address data that is stored in any one of the second address conversion table or the page table or both. Thus, the address converting apparatus separately controls the receiving buffer area that is frequently used, and areas other than the receiving buffer area. If the address conversion request is pertaining to the receiving buffer area, the address converting apparatus accesses the first address conversion table and uses the address data stored in the receiving buffer to carry out address conversion, thereby enabling to reduce cache misses during distribution of communication data and enhance the processing speed.

Furthermore, according to an embodiment of the present invention, the page table has a multilevel structure. The second address conversion table has a multilevel structure and stores address data such that the number of address data (stored addresses) increases in successive levels until the last level. Thus, the last level that is frequently used has the maximum number of address data, thereby enabling to reduce cache misses and enhance the processing speed.

Moreover, according to an embodiment of the present invention, when converting address by using the address data stored in the page table instead of using the address data stored in the second address conversion table, the address converting apparatus reads from the page table the address data that are sequentially stored in the page table along with the address data that is used for address conversion, and newly stores the read address data in the second address conversion table, thereby removing the necessity, during address conversion of sequential data for example, to read the address data from the main memory and enabling to enhance the process speed.

Furthermore, according to an embodiment of the present invention, during a stride transfer of data, based on data related to the stride transfer, a micro controller reads from the page table, address data that is estimated to be necessary for address conversion of subsequently received data, and newly stores the read address data in the second address conversion table. By storing the necessary address data beforehand in the second address conversion table waiting time to read the address data from the main memory can be reduced, thereby enabling to enhance the processing speed.

Although the present invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An address converting apparatus that converts an address in response to an address conversion request by using a page table that stores address data used for converting the address between a virtual address and a physical address, the address converting apparatus comprising:
a first address conversion table that extracts first address data corresponding to a receiving buffer area that is used for exchanging communication data in a main memory from among address data stored in the page table, and stores the first address data;
a second address conversion table that extracts second address data corresponding to an area other than the receiving buffer area in the main memory from among the address data stored in the page table, and stores the second address data;
an address-conversion-request determining unit that determines whether the address conversion request is for the receiving buffer area; and
an address converting unit that converts the address based on a result of determination by the address-conversion-request determining unit, wherein
when the address-conversion-request determining unit determines that the address conversion request is for the receiving buffer area, the address converting unit converts the address using at least one of the first address data and the address data stored in the page table, and
when the address-conversion-request determining unit determines that the address conversion request is not for the receiving buffer area, the address converting unit converts the address using at least one of the second address data and the address data stored in the page table.

2. The address converting apparatus according to claim 1, wherein
the page table includes a multilevel structure, and
the second address conversion table formed based on the multilevel structure, and stores the second address data in such a manner that number of address data in each successive level increases toward a last level.

3. The address converting apparatus according to claim 1 or 2, wherein
the address converting unit reads, when converting the address using the address data stored in the page table without using the second address data, third address data for converting the address and fourth address data stored in series with the third address data from the page table, and stores the third address data and the fourth address data in the second address conversion table.

4. The address converting apparatus according to claim 1, 2, or 3, wherein
the address converting unit reads, during a stride transfer of data, fifth address data that is estimated to be necessary for an address conversion of subsequently received data from the page table, based on data related to the stride transfer, and stores the fifth address data in the second address conversion table.

5. An address conversion method that converts an address in response to an address conversion request by using a page table that stores address data used for converting the address between a virtual address and a physical address, the method comprising:
a first address conversion step that extracts first address data corresponding to a receiving buffer area that is used for exchanging communication data in a main memory from among address data stored in the page table, and stores the first address data;
a second address conversion step that extracts second address data corresponding to an area other than the receiving buffer area in the main memory from among the address data stored in the page table, and stores the second address data;
an address-conversion-request determining step that determines whether the address conversion request is for the receiving buffer area; and
an address converting step that converts the address based on a result of determination in the address-conversion-request determining step, wherein
when the address-conversion-request determining step determines that the address conversion request is for the receiving buffer area, the address converting step converts the address using at least one of the first address data and the address data stored in the page table, and
when the address-conversion-request determining step determines that the address conversion request is not for the receiving buffer area, the address converting step converts the address using at least one of the second address data and the address data stored in the page table.
